Europäisches Patentamt

European Patent Office

Office européen des brevets

(19)

(11) **EP 1 184 078 A1**

(12) # EUROPEAN PATENT APPLICATION

(43) Date of publication:
06.03.2002 Bulletin 2002/10

(51) Int Cl.$^7$: **B01J 37/02**, B01J 19/08

(21) Application number: 00810778.1

(22) Date of filing: 30.08.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **ABB RESEARCH LTD.**
**8050 Zürich (CH)**

(72) Inventors:
• **Eliasson, Baldur**
  **5413 Birmensdorf (CH)**

• **Zhang, Kui**
  **Tianjin 30072 (CN)**
• **Kogelschatz, Ulrich**
  **5212 Hausen (CH)**
• **Killer, Eric**
  **5430 Wettingen (CH)**
• **Xue, Bingzhang**
  **5413 Birmensdorf (CH)**

(74) Representative: **ABB Patent Attorneys**
**c/o ABB Business Services Ltd, Intellectual Property (SLE-I), Haselstrasse 16/699**
**5401 Baden (CH)**

(54) **Catalytic dielectric barrier discharge reactor**

(57) A method of forming an adhering catalytic layer on an element for a dielectric barrier discharge reactor, wherein the element is a dielectric material or an electrode, the catalytic layer or catalyst carrier layer consisting at least in part of a catalyst selected from the group consisting of zeolites and zeolite-like materials; the method comprising the steps of a) providing a composition containing at least one silicon source and at least one aluminium source; b) disposing the composition on the element; c) heating the element with the composition disposed thereon; d) controlling the disposing and the heating to form the adhering catalytic layer on the element.

**EP 1 184 078 A1**

**Description**

Background of the Invention

The present invention relates to a method of forming an adhering catalytic layer on an element for a dielectric barrier discharge reactor, to a dielectric material for a dielectric barrier discharge reactor comprising an adhering catalytic layer, to an electrode for a dielectric barrier discharge reactor comprising an adhering catalytic layer, and to a dielectric barrier discharge reactor.

Plasma chemical processes using non-equilibrium discharges have attracted a great deal of interest. Particularly, silent discharges have demonstrated their suitability for large-scale industrial applications, such as the generation of ozone. A characteristic of the silent discharge is the presence of a dielectric so that they are also referred to as dielectric barrier discharges.

Prior Art

The possibility of using dielectric barrier discharges for hydrocarbon synthesis has been recognized. Thus, in the pending European Patent application No. 99810261 filed by the present assignee the synthesis of liquid hydrocarbons is disclosed, wherein a mixture of carbon dioxide and methane is exposed to a dielectric barrier discharge in the presence of a normally solid catalyst such as a zeolite or a zeolite-like material. In order to keep the zeolite catalyst within the discharge space a catalyst support as described in the EP 899 010 is applied.

Thus, EP 899 010 describes a catalyst support and a catalyst carrier, respectively, which is particularly useful for application in dielectric barrier discharge reactors. This catalyst support is made of inert, but gas-permeable, glassfiber fleece having at least two layers, between which the catalytic material is sandwiched. The whole support is then tightly wrapped around the outer surface of a dielectric tube. The catalytic material usable with these catalyst supports are in general granules, preferably with a diameter less than 1 mm.

However, beside the difficulty in handling and arranging those and other known catalyst supports it has been experienced that an extended use of the above-mentioned described catalyst support may lead to a remarkable loss in quality. So, after repeated use of those supports the fleece can become brittle so that it could not be wrapped around the dielectric tube as tightly as it should to keep the catalytic material in place. As a consequence, catalytic material may be lost and/or the operability of the catalytic dielectric barrier discharge may be severely hampered.

Objects of the Invention

It is therefore a main object of the present invention to avoid the disadvantages and limitations of prior art methods and apparatus means.

Moreover, it is an object of the present invention to provide for a method, which method allows to dispose a catalyst consisting at least in part of a zeolite or a zeolite-like material on an element for a dielectric barrier discharge reactor, such as a dielectric material or an electrode, in such a manner that the need of a catalyst support is obviated.

It is a further object of the present invention to provide for a method, which method allows to dispose a catalyst consisting at least in part of a zeolite or a zeolite-like material on an element for a dielectric barrier discharge reactor, such as a dielectric material or an electrode, in such a manner that the catalytic properties of the zeolite or zeolite-like material are not negatively affected.

It is still another object of the present invention to provide for a method, which method allows to dispose a catalyst consisting at least in part of a zeolite or a zeolite-like material on an element for a dielectric barrier discharge reactor, such as a dielectric material or an electrode, so that the zeolite or the zeolite-like material is integrally connected to the dielectric material or the metal electrode of the dielectric barrier discharge reactor.

It is another object of the present invention to provide for a method, which method allows to dispose a catalyst consisting at least in part of a zeolite or a zeolite-like material on an element for a dielectric barrier discharge reactor, such as a dielectric material or an electrode, so that the catalyst, i.e. the zeolite or the zeolite-like material can be reused and even regenerated in a very simple manner.

Furthermore, it is an object of the present invention to provide for a method of forming an adhering catalytic layer consisting at least in part of a zeolite or a zeolite-like material on an element for a dielectric barrier discharge reactor, such as a dielectric material or an electrode, which method allows to modify the zeolite and the zeolite-like material and thus their catalytic properties in a very simple manner.

Further objects and advantages of the present invention will become apparent as this specification proceeds.

Brief Summary of the Invention

We have found that the objects can be achieved according to a first general embodiment of the invention by a method as set forth in claim 1. Accordingly, the invention provides for a method of forming an adhering catalytic layer on an element for a dielectric barrier discharge reactor, wherein the element is a dielectric material or an electrode, the catalytic layer consisting at least in part of a catalyst selected from the group consisting of zeolites and zeolite-like materials; the method comprising the steps of a) providing a composition containing at least one silicon source and at least one aluminium source; b) disposing the composition on said element; c) heating the element with the composition disposed thereon; and d) controlling the disposing and the heating to form the adhering catalytic layer on the element.

Moreover, in a second general embodiment the present invention provides for a dielectric material for a dielectric barrier discharge reactor comprising an adhering catalytic layer, wherein the adhering catalytic layer consisting at least in part of a catalyst selected from the group consisting of zeolites, modified zeolites and zeolite-like materials.

In a third general embodiment the present invention provides for an electrode for a dielectric barrier discharge reactor comprising an adhering catalytic layer, wherein the adhering catalytic layer consisting at least in part of a catalyst selected from the group consisting of zeolites, modified zeolites and zeolite-like materials.

In a fourth general embodiment the present invention provides for a dielectric barrier discharge reactor for catalytic conversion of a fluid or normally solid material comprising a first electrode means having a first effective electrode surface; a second electrode means having a second effective electrode surface; at least one layer of a normally solid dielectric material positioned between the first and the second electrode means, the dielectric material having at least one dielectric material surface being exposable to the fluid or normally solid material; a normally solid catalyst being a member selected from the group consisting of zeolites, modified zeolites and zeolite-like materials; wherein at least one of the first effective electrode surface, the second effective electrode surface or the at least one dielectric material surface comprises an adhering catalytic layer, the adhering catalytic layer consisting at least in part of the normally solid catalyst.

The present invention allows to form a zeolite- or zeolite-like material-containing catalytic layer on an element for a dielectric barrier discharge reactor, which catalytic layer is integrally connected to the element, i.e. is joined and held fast on the element. Moreover, by such an adhesion of the catalytic layer on the element, in accordance with the invention, no negative affection of the catalytic properties of the zeolite or the zeolite-like material takes place.

Moreover, the present invention allows to reuse a given zeolite or zeolite-like material catalyst for catalytic dielectric barrier discharges since it is adhered to an essential part of a dielectric barrier discharge reactor, and thus, can be transferred as an unit, i.e. the dielectric material or the electrode having the catalytic layer adhered onto, to another dielectric barrier discharge reactor. Furthermore, if the catalytic layer needs to be regenerated, and in particular, needs to be purified from undesired products, the present invention allows to simply do the regeneration or the required purification operation directly with the element on which the catalytic layer is adhered to. Therefore, there is no need for manipulations, such as removal and re-disposing of the catalyst to an support or the like, in order to effect such a regeneration or purification of the catalyst.

Another advantage of the present invention is the possibility to modify the catalytic properties of a given zeolite or zeolite-like material catalyst being part of a catalytic layer while the layer is adhered on an element for a dielectric barrier discharge reactor, and thus, a removal and a re-disposing of the zeolite or the zeolite-like material is again obviated.

Definitions, Detailed Description of Preferred Embodiments and Elements of the Invention

The term "about" as used herein before any numeral implies a variation of typically ± 10%.

The term "normal" with regard to boiling points, boiling ranges and the like indicates that these values are understood as being corrected for "normal conditions", i.e. a temperature of 25°C and an atmospheric pressure of 1013 mbar. In analogy, the term "normal" with respect to physical states of matter and the like indicates that they are referred to said "normal conditions". The term "fluid material" as used herein indicates the state of matter of said material and normally gaseous and normally liquid materials are encompassed within this expression.

The term "layer" is used herein to refer to any planar or curved stratum having a width dimension that is substantially larger than its thickness dimension; typically, the width:thickness ratio is at least 10:1 and generally well above that value.

Zeolites and zeolite-like materials are "shape-selective catalysts" having an at least partially crystalline, typically completely crystalline, solid structure. The term "shape-selective catalyst" is intended to refer to a catalyst that owns a special structure containing channels and pores, respectively, to limit the diffusion of the reacting molecules and the formed product molecules through its framework. Only molecules with diameters smaller than the openings and apertures, respectively, of the channels can pass through the shape-selective catalyst. Moreover, an additional constraint is imposed by the size and shape of the apertures and channels with respect to possible transition states of the reaction.

Zeolites are crystalline aluminosilicates of group IA and group IIA elements such as sodium, potassium, magnesium and calcium with the empirical formula (I)

$$M_{2/n}O \cdot (1-y)Al_2O_3 \cdot ySiO_2 \cdot wH_2O \qquad (I)$$

wherein

n is the valence of the cation M,
y the molar fraction of $SiO_2$ in the zeolite framework, and
w number of water molecules present in the zeolite.

Zeolite structures are based on a three-dimensional framework of $AlO_4$ and $SiO_4$ tetrahedra (Si and Al defined as T atoms) which are interlinked through common oxygen atoms forming O-T-O-T-O bonds to give said three dimensional network through which channels run. Each $AlO_4$ tetrahedron in the framework bears a net negative charge which is compensated by a cation of the aforementioned group IA and group IIA elements. This cation is mobile and can be exchanged by other cations. In the interior of the channels are water molecules and the mentioned mobile cations. Criteria to distinguish zeolites and zeolites structures, respectively, are, inter alia, the number of either T- or O-atoms forming the rings and openings, respectively, controlling diffusion through the channels as well as the molar ratio of $SiO_2/Al_2O_3$, in short the Si/Al ratio.

"Zeolite-like materials" as used herein refers to normally solid materials, such as aluminophosphates, silicoaluminophosphates, metalloaluminophosphates and metal oxides containing OH groups, which have solid structures similar to zeolites and, therefore, which contain channels with sizes and shapes similar to channel sizes and shapes in zeolite structures. In particular, "zeolite-like materials" refer to crystalline solids which have zeolite-like structures as indicated by their incorporation in the "Atlas of Zeolite Structure Types" reported by Meier and Olson in "Atlas of Zeolites Structure Types", Zeolites 17(1996), 1-230 (report being incorporated herein for all purposes by way of reference).

In a preferred embodiment of the present invention the composition contains a zeolite or a zeolite-like material as said silicon source and said aluminium source and at least one inorganic adhesive. Even if phosphorus-containing inorganic adhesive can be used for the present invention, the at least one inorganic adhesive contains preferably silicon or aluminium. Preferred examples are water-glass, silica gel, alumina gel or silica-alumina gel. An "inorganic adhesive" according to the invention is an inorganic compound having the capacity of adhering a zeolite or a zeolite-like material onto an element for a dielectric barrier discharge reactor without negatively affecting the catalytic properties, and, in particular, without, at least in a major part, blocking the pores needed for the catalytic dielectric barrier discharge.

Preferably, the composition containing the zeolite or the zeolite-like material and the inorganic adhesive is treated with water prior to its disposing on the dielectric material or the electrode. Typically, the zeolite or the zeolite-like material and the at least one inorganic adhesive are contained in the composition at a weight ratio of zeolite: adhesive of between about 3:1 to about 6:1. Most preferred is a composition containing 75-85% of weight of zeolite material and 15-25% of weight of inorganic adhesive.

In a further preferred embodiment of the present invention, the inventive method comprises the additional step of repeating at least once a sequence of the steps a)-d) with the adhering catalytic layer on the element of each previous sequence. A typical example for such a repeating of the steps of the inventive method is, e.g. the need to modify and to control the amount of catalyst coated on the element. Thus, after provision of the composition, it is disposed on the already formed catalytic layer on this element. The sequence of the steps a) to d) can be repeated several times until the requirements, such as amount or quality are fulfilled, wherein the composition of each sequence is disposed on the catalytic layer formed by the previous sequence.

In another very preferred embodiment of the present invention the composition is composed so that the adhering catalytic layer consists essentially of a zeolite or a zeolite-like material. This very preferred embodiment provides, thus, for a catalytic layer consisting essentially of a zeolite or a zeolite-like material by selection of a composition which is composed so that an in-situ synthesis of the zeolite or zeolite-like material on the dielectric material or the electrode is feasible and effected by the inventive method. Therefore, the selection of the nature and the exact ratio of ingredients of the preferred composition is critical in accordance with the present invention for a successful in-situ synthesis of the zeolite or the zeolite-like material on the dielectric material or the electrode. This is even more the case in order to avoid, in particular impurities in the catalytic layer. Very preferred examples thereof are given in the Example Section. Moreover, the nature and the exact ratio of ingredients of a composition needed for an in-situ synthesis is known by the man skilled in the art of zeolite synthesis. However, it is within the scope of the present invention that any zeolite or zeolite-like material is in-situ synthezisable on an element, such as zeolites having 8-, 9-, 10-, 12-, 14-, 18- or 20-ring

EP 1 184 078 A1

channels. Preferred examples are given in the Example Section.

The inventive method allows the in-situ synthesis of zeolites or zeolite-like material on the element for the dielectric barrier discharge reactor, i.e. the synthesis of zeolites or zeolite-like material directly on the element. The formation of the zeolite and the zeolite-like material, thus, takes place directly on the element.

Typically, the preferred composition further contains a template. Such a template generally contributes to the stability of the formed zeolite or zeolite-like material and allows the formation of the microporous voids, i.e. the channels and the cavities. Preferably the template is organic in nature and comprising at least one member selected from alkyl- or arylammonium hydroxides, sulfates, bromides, chlorides or the like.

Preferably, the selection of the composition and the controlling of the inventive method leads to the formation of a catalytic layer consisting essentially of crystallites of the zeolite or the zeolite-like material. The terms "consisting essentially of zeolite or zeolite-like material" and "consisting essentially of crystallites of the zeolite or the zeolite-like material" indicate a value of 90%, preferably 95%, and most preferably 98% of weight and of crystallinity, respectively.

Typically, the in-situ synthesis of the zeolite or the zeolite-like material on the element for the dielectric barrier discharge reactor further comprises the additional step of washing the adhering catalytic layer followed by drying of the adhering catalytic layer.

Advantageously, the inventive method allows to modify the zeolite or the zeolite-like material contained in the adhering catalytic layer leading to modified zeolites, and can be a preferred additional step of the inventive method. Those modifications which are effected with the catalytic layer adhered to the element allows, thus, to modify in a simple way the catalytic properties of the zeolite or the zeolite-like material.

"Modified zeolites" as used herein refers to natural or synthetic zeolites or zeolite-like materials which have been modified by either cation or ion exchange, thermal treatment, hydrothermal treatment, impregnation with or without subsequent reduction, treatment with inorganic or organic acids, treatment with inorganic or organic F materials, i.e. inorganic or organic compounds containing fluor or fluoride, as well as with organic silica materials, and, in particular, by an isomorphic substitution of the T atoms. Thus, various T atoms can be introduced into a zeolite framework, such as Ga, Ge, Li, Be, B, Mg, Ti, Mn, Fe, Co, In, As and H. Moreover, aluminium removal with simultaneous substitution by other elements such as Si, Ti, V, Fe, Sn, Ge and P can be effected.

The indicated impregnation can take place by incorporation of at least one substance selected from the group of metal ions and group IA, IIa, IB, IIb and VIII elements of the periodic table. The latter mentioned elements, i.e. alkali, earth alkali elements as well as the elements of the zinc and the copper group and the iron groups of the periodic table can be present either in ionic or atomic form. Thus, such an impregnation can lead to a catalyst having modified catalytic properties based on the combination and/or synergism of the zeolite or zeolite-like catalyst and the catalytic effect of the impregnated metallic or metal component. However, the adhering catalytic layer according to the invention can also be used as and function as an ordinary catalyst carrier or a catalyst support, i.e. just carrying the actual catalytic species, such as the above mentioned metallic or metal components or other catalytic species, for a specific dielectric barrier discharge.

Further preferred embodiments of the present invention are defined in the sub-claims. So, the adhering catalytic layer on the element has a thickness of between about 1μm and about 100μm, preferably between about 10μm and about 50μm.

In a further preferred embodiment of the present invention the heating is effected at a temperature of between about 100°C and about 200°C, preferably between about 120°C and about 180°C, preferably for a duration of between about 24 h and 48 h. Typically the inventive method is effected comprising the additional step of treating the element prior to the disposing so that the surface area of the element is increased and roughened up. This can be effected, e. g. by sand blasting the surface.

The dielectric material used for the present invention can be made of quartz, glass, ceramic or the like and can be of any shape such as cylindrical, tubular, planar or the like. The very preferred dielectric material of the present invention is a dielectric tube made of quartz.

Typically, the electrodes for dielectric barrier discharge reactors are made of corrosion-resistant metals or alloys. Preferably, the electrode on which the adhering catalytic layer is formed thereon is made of stainless steel or contains at least stainless steel.

EXAMPLES

- In-situ synthesis of zeolite ZSM-5 on the external surface of the quartz tube and on the inner surface of the stainless steel reactor for a dielectric barrier discharge reactor

Source materials (all commercially available):

Distilled water
Sodium hydroxide (30wt.% in water)
Sodium silicate solution ($Na_2O$: 8wt.%, $SiO_2$ wt.28.5%)
Aluminum sulfate hexadecahydrate ($Al_2O_{12}S_3.16H_2O$)
Tetrapropylammonium bromide (TPABr)
Tetrapropylammonium hydroxide solution(TPAOH)
Sulfuric acid 98%
LS colloidal silica, 30wt.% suspension in water

Example 1:

Batch Composition:

$$6.0\ Na_2O : 1.0\ Al_2O_3 : 45.0\ SiO_2 : 5.0\ TPABr : 1840.0\ H_2O\ \text{(molar ratio)}$$

Calculate the amount of source materials according to the batch composition:

1) Aluminum sulfate hexadecahydrate ($Al_2O_{12}S_3.16H_2O$) : 3.15g;
2) Sodium silicate solution ($Na_2SiO_3$, $Na_2O$: 8wt.%, $SiO_2$ wt.28.5%): 94.7ml;
3) Distilled water: 235ml;
4) Sulfuric acid 98%: 5.43g;
5) Tetrapropylammonium bromide (TPABr): 13.30g.

Put a 94.7ml $Na_2SiO_3$ solution and 13.30g TPABr in a 500ml beaker. Mix with 235ml distilled water (First solution). Put 3.15g Aluminum sulfate hexadecahydrate ($Al_2O_{12}S_3.16H_2O$) and 5.43g sulfuric acid in a separate 500ml beaker. Then, add the first solution to this beaker as well. Mix the solution on a stir plate for 20 minutes. Transfer 100ml of the mixture to the gap between the stainless steel tube and the quartz tube in the reactor, let the slurry fill in the gap, and seal the reactor. Heat the reactor to 373K and hold there for 24 hours first, and then raise the temperature to 443K for 24hours.

After 48 hours heating, turn off the heat and let it cool to room temperature. Take the reactor apart and analyze the product formed on the inner surface of the stainless steel reactor and the external surface of the quartz tube. If the X-ray pattern matches the expected one, then wash it several times with a certain amount of water and then dry at 423K overnight. We can control the amount of zeolite ZSM-5 and the thickness of the layer or membrane formed on the surface of the quartz tube and the stainless steel tube by repeating the above operation several times (e.g. 2-3 times) according to the requirement.

The so-synthesized zeolite NaZSM-5 is calcined in air by heating at 16K/min to 773K for 4h to remove the organic template. The calcined sample is exchanged with 1M $NH_4Cl$ solution using a liquid to solid weight ratio of 4:1 at 363K for 4hours. The operation will be repeated for 4 times (for $NH_4Cl$ solution exchange) and the solid is washed with distilled water till it becomes Cl⁻ free. The product is dried at 363K overnight, and then calcined at 823K for 4h in order to obtain zeolite HZSM-5.

Example 2:

Batch Composition:

$$6.0\ Na_2O: 1.0\ Al_2O_3 : 45.0\ SiO_2 : 5.0\ TPABr : 1840.0\ H_2O\ \text{(molar ratio)}$$

Calculate the amount of source materials according to the batch composition:

1) Aluminum sulfate hexadecahydrate ($Al_2O_{12}S_3.16H_2O$): 3.15g;
2) Sodium silicate solution ($Na_2SiO_3$, $Na_2O$: 8wt.%, $SiO_2$ wt.28.5%) : 94.7ml;

3) Distilled water: 235ml;
4) Sulfuric acid 98%: 5.43g;
5) Tetrapropylammonium bromide (TPABr): 13.30g.

Put a 94.7ml $Na_2SiO_3$ solution and 13.30g TPABr in a 500ml beaker. Mix with 235ml distilled water (First solution). Put 3.15g Aluminum sulfate hexadecahydrate ($Al_2O_{12}S_3.16H_2O$) and 5.43g sulfuric acid in a separate 500ml beaker. Then, add the first solution to this beaker as well. Mix the solution on a stir plate for 20 minutes.

Coat a portion of the obtained slurry onto the surface of the quartz tube or the stainless steel tube with a brush. Dry it in air then put it into a stainless steel reactor, put 50ml water into the reactor, and do not let the water touch the surface of the quartz or the stainless steel tube and seal it.

Heat the reactor to 373K and hold there for 24 hours first, and then raise the temperature to 443K for 24hours.

After 48 hours heating, turn off the heat and let it cool to room temperature. Take the reactor apart and analyze the product formed on the inner surface of the stainless steel reactor and the external surface of the quartz tube. If the X-ray pattern matches the expected one, then wash it several times with a certain amount of water and then dry at 423K overnight. We can control the amount of zeolite ZSM-5 and the thickness of the layer or membrane formed on the surface of the quartz tube and the stainless steel tube by repeating the above operation several times (e.g. 2-3 times) according to the requirement.

The as-synthesized zeolite NaZSM-5 is calcined in air by heating at 16K/min to 773K for 4h to remove the organic template. The calcined sample is exchanged with 1M $NH_4Cl$ solution using a liquid to solid weight ratio of 4:1 at 363K for 4hours. The operation will be repeated for 4 times (for $NH_4Cl$ solution exchange) and the solid is washed with distilled water till it became $Cl^-$ free. The product will be dried at 363K overnight, and then calcined at 823K for 4h in order to obtain zeolite HZSM-5.

<u>Example 3:</u>

Batch Composition:

$$2\ Na_2O : 38.5\ SiO_2 : 3.8\ TPAOH : 620\ H_2O \text{ (molar ratio)}$$

Calculate the amount of source materials according to the batch composition:

1) Tetrapropylammonium hydroxide solution (TPAOH) : 38.55ml:
2) LS colloidal silica, 30wt.% suspension in water 64.17ml;
3) Sodium hydroxide solution (30wt.% in water): 8.27ml;
4). Distilled water 0.31ml.

Put 64.17ml ml LS colloidal silica, 30wt.% suspension in water and 38.55 ml Tetrapropylammonium hydroxide solution(TPAOH), 0.31ml distilled water and 8.27ml Sodium hydroxide (30wt.% in water) in a 250ml beaker. Then, mix them on a stir plate for 20 minutes to form a clear solution of mixtures.

Coat above mixture onto the sandblasted surface of the quartz tube or the stainless steel tube with a brush. Dry it in air then put it into a stainless steel reactor, put 50ml water into the reactor, and do not let the water touch the coated surface of quartz or stainless steel tube and seal it.

Heat the reactor to 373K and hold it there for 24 hours first, and then raise the temperature to 443K for 48hours.

After 48 hours heating, turn off the heat and let it cool to room temperature. Take the reactor apart and analyze the product formed on the inner surface of the stainless steel reactor and the external surface of the quartz tube. If the X-ray pattern matches the expected one, then wash it several times with a certain amount of water and then dry at 423K overnight. We can control the amount of zeolite ZSM-5 and the thickness of the layer or membrane formed on the surface of the quartz tube and the stainless steel tube by repeating the above operation several times (e.g. 2-3 times) according to the requirement.

The in-situ synthesized zeolite NaZSM-5 is calcined in air by heating at 16K/min to 773K for 4h to remove the organic template.

In order to meet the needs of different utilization purpose, zeolite produced (by in-situ synthesis method) on the surface of quartz tube or stainless steel tube can be modified by ion exchange, hydrothermal treatment, thermal treatment and metal oxide impregnation, chemical vapour deposition (CVD) and chemical liquid deposition (CLD) and the like procedures known to the person skilled in the art.

- Formation of an adhering catalytic layer on a quartz tube or a stainless steel electrode for a dielectric barrier discharge reactor starting from a composition containing a zeolite

Example 4:

Source materials:

Distilled water
Silica-Alumina gel (Composition: $3Na_2O\text{-}Al_2O_3\text{-}2SiO_2\cdot200H_2O$) NaZSM-5 ($SiO_2/Al_2O_3=38$) powder synthesized without using any organic template.

Put a certain amount of $Na_2SiO_3$ solution (50ml) in a 250ml beaker. Mix with certain amount of distilled water (50ml).
Add NaZSM-5 powder (20g) to the beaker. Mix NaZSM-5 and Si-Al gel solution on a stir plate for 20 minutes. Coat the slurry onto the sandblasted (after sandblast treatment) surface of quartz tube or stainless steel tube with a brush. Dry it in air overnight and then put it into an oven. Increase the temperature of the oven at 16K/min to 473K and hold there for 24hours.
After 24 hours heating, turn off the heat and let it cool to room temperature. Take the quartz tube out from the oven. We can control the amount of NaZSM-5 coated on the surface of the quartz tube or the stainless steel tube by repeating above operations according to the requirement.

Example 5:

Source materials:

Distilled water
Sodium silicate solution ($Na_2O=$ 7.5-8.5, $SiO_2=25.5\text{-}28.5\%$) Linder type 4A powder.

Put a certain amount of $Na_2SiO_3$ solution (100ml) in a 250ml beaker. Mix with certain amount of distilled water (50ml).
Add Linder 4A powder (30g) to the beaker. Mix them on a stir plate for 20 minutes. Coat the slurry onto the external surface of quartz tube and internal surface of stainless steel tube with a brush. Dry it in air overnight and then put it into an oven. Increase the temperature of the oven at 16K/min to 473K and hold there for 24hours.
After 24 hours heating, turn off the heat and let it cool to room temperature. Take the quartz tube out from the oven. We can control the amount of Linder type 4A zeolite coated on the surface of the quartz tube or the stainless steel tube by repeating above operations according to the requirement.

**Claims**

1. A method of forming an adhering catalytic layer on an element for a dielectric barrier discharge reactor, wherein said element is a dielectric material or an electrode, said catalytic layer consisting at least in part of a catalyst selected from the group consisting of zeolites and zeolite-like materials; said method comprising the steps of:

   a) providing a composition containing at least one silicon source and at least one aluminium source;
   b) disposing said composition on said element;
   c) heating said element with said composition disposed thereon;
   d) controlling said disposing and said heating to form said adhering catalytic layer on said element.

2. The method of claim 1, wherein said composition contains a zeolite or a zeolite-like material as said silicon source and said aluminium source and at least one inorganic adhesive, preferably at least one inorganic adhesive containing silicon or aluminium, and most preferably at least silica gel, alumina gel or silica-alumina gel.

3. The method of claim 2, wherein said zeolite or said zeolite-like material and said at least one inorganic adhesive are contained in said composition at a weight ratio of zeolite:adhesive of between about 3:1 to about 6:1.

4. The method of claim 2 or 3 comprising the additional step of repeating at least once a sequence of said steps a)-d) with said adhering catalytic layer on said element of each previous sequence.

5. The method of claim 1, wherein said composition is composed so that said adhering catalytic layer consists essentially of a zeolite or a zeolite-like material.

6. The method of claim 5, wherein said catalytic layer consists essentially of crystallites of said zeolite or said zeolite-like material.

7. The method of any of claims 1 to 6, wherein said controlling is effected so that said adhering catalytic layer on said element has a thickness of between about 1μm and about 100μm, preferably between about 10μm and about 50μm.

8. The method of any of claims 1 to 7, wherein said heating is effected at a temperature of between about 100°C and about 200°C, preferably between about 120°C and about 180°C, preferably for a duration of between about 24 h and 48 h.

9. The method of any of claims 1 to 8 comprising an additional step of treating said element prior to said disposing so that the surface area of said element is increased.

10. The method of any of claims 1 to 9, wherein said dielectric material is made of quartz or glass.

11. The method of any of claims 1 to 10, wherein said metal electrode is a stainless steel electrode.

12. A dielectric material for a dielectric barrier discharge reactor comprising an adhering catalytic layer, wherein said adhering catalytic layer consisting at least in part of a catalyst selected from the group consisting of zeolites, modified zeolites and zeolite-like materials.

13. The dielectric material of claim 12, wherein said adhering catalytic layer consisting essentially of a catalyst selected from the group consisting of zeolites, modified zeolites and zeolite-like materials.

14. The dielectric material of claim 12 or 13, wherein said dielectric material is a quartz tube.

15. The dielectric material of any of claims 12 to 14, wherein said adhering catalytic layer has a thickness of between about 1μm and about 100μm, preferably between about 10μm and about 50μm.

16. An electrode for a dielectric barrier discharge reactor comprising an adhering catalytic layer, wherein said adhering catalytic layer consisting at least in part of a catalyst selected from the group consisting of zeolites, modified zeolites and zeolite-like materials.

17. The electrode of claim 16, wherein said adhering catalytic layer consisting essentially of a catalyst selected from the group consisting of zeolites, modified zeolites and zeolite-like materials.

18. The electrode of claim 16 or 17, wherein said metal electrode is a stainless steel electrode.

19. The electrode of any of claims 16 to 18, wherein said adhering catalytic layer has a thickness of between about 1μm and about 100μm, preferably between about 10μm and about 50μm.

20. A dielectric barrier discharge reactor for catalytic conversion of a fluid or normally solid material comprising

    a first electrode means having a first effective electrode surface;
    a second electrode means having a second effective electrode surface;
    at least one layer of a normally solid dielectric material positioned between said first and said second electrode means, said dielectric material having at least one dielectric material surface being exposable to said fluid or normally solid material;
    a normally solid catalyst being a member selected from the group consisting of zeolites, modified zeolites and zeolite-like materials;

wherein at least one of said first effective electrode surface, said second effective electrode surface or said at least one dielectric material surface comprises an adhering catalytic layer, said adhering catalytic layer consisting at least in part of said normally solid catalyst.

21. The dielectric barrier discharge reactor of claim 20, wherein said adhering catalytic layer consisting essentially of said normally solid catalyst.

22. The dielectric barrier discharge reactor of claim 20 or 21, wherein said adhering catalytic layer has a thickness of between about 1μm and about 100μm, preferably between about 10μm and about 50μm.

23. The dielectric barrier discharge reactor of any of claims 20 to 22, wherein said at least one dielectric material is a quartz tube.

24. The dielectric barrier discharge reactor of any of claims 20 to 23, wherein said first and/or said second electrode is a stainless steel electrode.

**European Patent Office**

## EUROPEAN SEARCH REPORT

Application Number

EP 00 81 0778

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 06495 A (BEKKUM HERMAN VAN ;JANSEN JACOBUS CORNELIS (NL); UNIV DELFT TECH ()) 19 February 1998 (1998-02-19) * abstract * | 12-14 | B01J37/02 B01J19/08 |
| Y | * page 1, line 10 - page 3, line 10 * * page 7, line 3 - line 24; claims 1-10 * | 1-11 | |
| X | WO 98 32531 A (UNIV OKLAHOMA STATE) 30 July 1998 (1998-07-30) | 16-18, 20,21, 23,24 | |
| Y | * page 17, line 6 - line 25 * * page 18, line 7 - line 31 * * page 20, line 30 - page 21, line 6; claims 1,23,24,27,30; figures 2,4,11 * * page 13, line 38 - page 14, line 4 * | 1-11 | |
| X | US 5 824 617 A (LAI WENYIH FRANK) 20 October 1998 (1998-10-20) | 12-15 | |
| A | * see examples * | 1-11 | |
| X | DD 242 007 A (AKAD WISSENSCHAFTEN DDR) 14 January 1987 (1987-01-14) * the whole document * | 12-14, 20,21, 23,24 | TECHNICAL FIELDS SEARCHED (Int.Cl.7) B01J |
| X | EP 0 503 500 A (MATSUSHITA ELECTRIC IND CO LTD) 16 September 1992 (1992-09-16) * abstract * * page 4, line 26 - line 29; examples 1,6 * | 12-14 | |

-/--

The present search report has been drawn up for all claims

| Place of search | Date of completion of the search | Examiner |
|---|---|---|
| THE HAGUE | 29 January 2001 | Veefkind, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 184 078 A1

**European Patent Office**

**EUROPEAN SEARCH REPORT**

Application Number

EP 00 81 0778

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 609 736 A (YAMAMOTO TOSHIAKI) 11 March 1997 (1997-03-11) * abstract * * column 2, line 8 - line 34 * * column 2, line 45 - line 52 * * column 8, line 25 - column 9, line 34; figures 1-5 * | 12-24 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 29 January 2001 | Veefkind, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 00 81 0778

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2001

| Patent document cited in search report | | Publication date | Patent family member(s) | | Publication date |
|---|---|---|---|---|---|
| WO 9806495 | A | 19-02-1998 | NL | 1003778 C | 12-02-1998 |
| | | | AU | 3869797 A | 06-03-1998 |
| WO 9832531 | A | 30-07-1998 | AU | 6242398 A | 18-08-1998 |
| | | | US | 6159432 A | 12-12-2000 |
| US 5824617 | A | 20-10-1998 | AU | 3003795 A | 09-02-1996 |
| | | | EP | 0769983 A | 02-05-1997 |
| | | | JP | 10506363 T | 23-06-1998 |
| | | | WO | 9601685 A | 25-01-1996 |
| | | | US | 5763347 A | 09-06-1998 |
| | | | US | 5849980 A | 15-12-1998 |
| | | | US | 5895769 A | 20-04-1999 |
| | | | ZA | 9505723 A | 16-04-1996 |
| DD 242007 | A | 14-01-1987 | NONE | | |
| EP 0503500 | A | 16-09-1992 | JP | 2068453 C | 10-07-1996 |
| | | | JP | 4281177 A | 06-10-1992 |
| | | | JP | 7104102 B | 13-11-1995 |
| | | | CN | 1064822 A,B | 30-09-1992 |
| | | | DE | 69207234 D | 15-02-1996 |
| | | | DE | 69207234 T | 29-08-1996 |
| | | | KR | 9607587 B | 07-06-1996 |
| | | | US | 5278113 A | 11-01-1994 |
| | | | JP | 2101087 C | 22-10-1996 |
| | | | JP | 5146683 A | 15-06-1993 |
| | | | JP | 8011188 B | 07-02-1996 |
| US 5609736 | A | 11-03-1997 | US | 5843288 A | 01-12-1998 |

EPO FORM P0459

For more details about this annex : see Official Journal of the European Patent Office, No. 12/82